# EUROPÄISCHE PATENTSCHRIFT

(11) **EP 2 504 611 B1**
(45) Veröffentlichungstag und Bekanntmachung des Hinweises auf die Patenterteilung: **23.10.2013**
(21) Anmeldenummer: 10781440.2
(22) Anmeldetag: 16.11.2010
(51) Int. Cl.: F16K 31/05

(54) **BETÄTIGUNGSVORRICHTUNG FÜR GEHÄUSE- ODER GEHÄUSELOSE ARMATUREN**
ACTUATING DEVICE FOR HOUSED OR HOUSINGLESS VALVES
DISPOSITIF D'ACTIONNEMENT POUR ROBINETTERIE AVEC OU SANS CORPS

(30) Priorität: 26.11.2009 DE 102009055741
(43) Veröffentlichungstag der Anmeldung: 03.10.2012
(73) Patentinhaber: BÜ-SCH ARMATUREN GMBH, 90478 Nürnberg (DE)
(72) Erfinder: SPOTKA, Rudolf, 90427 Nürnberg (DE)
(74) Vertreter: Stippl, Hubert
(86) Internationale Anmeldenummer: PCT/EP2010/006976
(87) Internationale Veröffentlichungsnummer: WO 2011/063904

(56) Entgegenhaltungen:
- EP-A2- 0 784 175
- WO-A1-02/095926
- WO-A1-03/100950
- DE-U1- 20 018 563
- DE-U1- 29 807 444
- FR-A- 1 328 431
- US-A- 3 863 888
- US-A1- 2004 003 710

## Beschreibung

Die vorliegende Erfindung betrifft eine Betätigungsvorrichtung für Gehäuse- oder gehäuselose Armaturen, insbesondere für Armaturen für Rohrleitungen zum Transport von flüssigem oder gasförmigem Medium, vorzugsweise für Rohrleitungen ab einer Nennweite von DN 100 oder Gerinne, gemäß dem Oberbegriff des Anspruchs 1.

Die erfindungsgemäße Betätigungsvorrichtung ist insbesondere dafür vorgesehen, rotierende Antriebselemente mit einem Rotationsmittel von mehr als 360° anzutreiben.

### Stand der Technik

Die DE 43 44 325 Al beschreibt eine Betätigungsvorrichtung. Sie umfasst einen Elektromotor, welcher über ein Zahnradvorgelege und eine motorisch betriebene Schnecke ein einstufiges Planetengetriebe antreibt, dessen Abtrieb mit der Armatur in Verbindung steht. Darüber hinaus ist eine mittels Handrad zu betätigende, weitere Schnecke als Notlaufgetriebe vorgesehen, welche gegenüberliegend zur motorisch betriebenen Schnecke am Planetengetriebe angeordnet ist. Durch eine entsprechende Auswahl der Zahnräder kann mittels des einstufigen Planetengetriebes beim Motorbetrieb eine Übersetzung von ca. 1 : 2 und bei Handbetrieb eine Übersetzung von 1 : 3 ins Schnelle erzielt werden. Für die Gesamtübersetzung bei Handbetrieb ist ein Verhältnis von 12 : 1 angegeben. Die Endpositionen des Antriebs werden durch eigens vorgesehene Endschalter festgelegt.

Ferner offenbart die DE 23 46 067 eine Antriebseinrichtung zum Antrieb von translatorisch bewegbaren Stellgliedern, insbesondere Armaturen mit einem Planetengetriebe, welches mittels eines kleinen, reversierbaren elektrischen Antriebsmotors mit Endlagenabschalteinrichtung betreibbar ist. Zusätzlich ist ein Stirnradgetriebe vorgesehen, welches ebenfalls vom Antriebsmotor, aber auch mittels einer Handkurbel betätigbar ist.

Aus der Broschüre "AUMA Solutions for a World in Motion - Stellantriebs-Steuerungen" ergeben sich unterschiedliche Betätigungsvorrichtungen für Armaturen unter Verwendung von sog. Drehstrom-Asynchronmotoren. Hierbei handelt es sich um robuste Motoren, bei denen die drei Phasen der Spannungsversorgung in korrekter Reihenfolge zugeführt werden müssen. Diese Art von Antrieb erfordert eine automatische Phasenkorrektur, die die Ansteuerung des Motors automatisch dem anliegenden, dreiphasigen Drehfeld anpasst, um Fehlfunktionen zu vermeiden. Diese Art von Antrieb wirkt zusammen mit Endlagenschaltern, die so ausgelegt sind, dass der Motorstrom direkt über sie geführt wird. Bei Ansprechen eines solchen Schalters in der Endlage wird die Motorversorgung unmittelbar unterbrochen. Die Anzeige der Stellung des Motors wird über eine mechanische Stellungsanzeige realisiert, die über einen Welle direkt mit dem Abtrieb und somit der Armaturenwelle gekoppelt ist. Derartige Antriebe sind daher hinsichtlich ihres konstruktiven Aufbaus aufwendig und begründen zudem größere Bauformen. Zudem resultiert aus der Bauart der Antriebe der Nachteil, dass für unterschiedliche Einsatzbereiche, insbesondere unterschiedliche Drehmoment- und/oder Drehzahlbereiche unterschiedliche Modellvarianten der Antriebe vorgesehen sind.

FR 1328431 beschreibt eine Betätigungsvorrictung gemäß dem Oberbegriff des Anspruchs 1.

### Aufgabe

Die Aufgabe der vorliegenden Erfindung besteht darin, eine neuartige Betätigungsvorrichtung für Armaturen der gattungsgemäßen Art zur Verfügung zu stellen, welche die vorstehenden Nachteile vermeidet.

### Lösung

Die vorstehende Aufgabe wird dadurch gelöst, dass als Antriebsmotor ein Servomotor vorgesehen ist, welcher eine Messeinrichtung aufweist, die die jeweils aktuelle Position des Servomotors bezüglich seiner Anfangsposition bestimmt und entsprechende Messwerte ausgibt, ein Arbeitsspeicher vorgesehen ist, in den die Messwerte der Messeinrichtung des Servomotors eingeschrieben werden und eine elektronische Steuerungseinheit vorgesehen ist, die die Messwerte der Messeinrichtung des Servomotors laufend ausliest und eine Positionssteuerung des Servomotors und damit der Betätigungsvorrichtung aufgrund der Messwerte der Messeinrichtung des Servomotors vornimmt, und das Getriebe ein Übersetzungsverhältnis von mindestens 40:1 aufweist.

Zum einen bewirkt die Erfindung reduzierte Abmessungen der Betätigungsvorrichtung, zum anderen wird eine vereinfachte Bauweise erreicht, da auf mechanische Endlagenschalter sowie mechanische Stellungsanzeigen verzichtet werden kann.

Der Einsatz des Servomotors ermöglicht es im Vergleich zu den aus dem Stand der Technik bekannten Betätigungsvorrichtungen, den Notlaufantrieb mit einfachen Hilfsmitteln, beispielsweise einem Akkuschrauber, zu realisieren. Dies wird möglich, weil das Drehmoment eines Akkuschraubers größenordnungsmäßig ähnlich dem Drehmoment eines Servomotors ist.

Dadurch, dass die Abtriebsseite des Servomotors mit der Antriebsseite des Getriebes ohne Übersetzung in Verbindung steht, kann eine sehr einfache Verbindung der beiden Bauteile zueinander ohne Zwischenschaltung eines Getriebes vorgenommen werden, was einen erheblichen Einfluss auf die Reduzierung der Baugröße der Gesamtanordnung hat.

Zweckmäßigerweise ist die Betätigungsvorrichtung derart ausgestaltet, dass bei Betrieb des Notlaufantriebs der Servomotor mitgedreht wird. Die Erfindung hat somit den Vorteil, dass keine konstruktiv aufwendige Entkopplung zwischen Getriebe und Servomotor vorgesehen sein muss. Ferner wird die Positionsbestimmung bei Betätigung des Notlaufantriebs aufgrund der Drehung des Servomotors weiterhin sichergestellt.

In vorteilhafter Weise ist, sofern das Getriebe über den Notlaufantrieb, beispielsweise bei Stromausfall oder dergleichen, betrieben werden muss, die Herstellung eines direkten Kraftschlusses ausreichend. Ein Übersetzungsgetriebe ist somit nicht notwendig.

Der Notlaufantrieb kann sich gemäß einer zweckmäßigen Ausgestaltung zunächst in einer Passivposition befinden und wird erst dann aktiv, wenn eine Koppelung des Notlaufantriebs mit der Antriebswelle des Getriebes stattgefunden hat.

Zweckmäßigerweise weist das Getriebe mindestens ein Übersetzungsverhältnis von 70:1, besonders vorzugsweise 90:1, auf. Ideal ist ein Bereich von 60:1 - 80:1, z.B. 70:1.

Zweckmäßigerweise beträgt das Drehmoment des Servomotors maximal 30 Nm, vorzugsweise maximal 20 Nm, besonders vorzugsweise maximal 10 Nm. Idealerweise besitzt der Servomotor ein Drehmoment von 3 - 8 Nm, ganz besonders vorteilhaft 4 - 7 Nm.

Bei den Messwerten der Messeinrichtung des Servomotors handelt es sich zweckmäßigerweise um Zählimpulse in Bezug auf die Drehbewegung des Servomotors, die für die laufende Positionsbestimmung und/oder Geschwindigkeitsbestimmung der Öffnungs- oder Schließbewegung der Armatur auswertbar und der Steuerung zuführbar sind. Hierdurch wird es möglich, die Öffnungs- bzw. Schließbewegung der Armatur abhängig von der Position derselben in unterschiedlicher Geschwindigkeit vorzunehmen, also besondere Geschwindigkeitskennlinien zu programmieren. Insbesondere kann bei noch geschlossener Armatur und hierbei anstehendem Wasserdruck eine langsame Öffnungsgeschwindigkeit vorgesehen sein, die bei Erreichen einer bestimmten Position, nämlich dann, wenn der Wasserdruck nicht mehr vorhanden ist oder sich reduziert hat, erhöht wird.

Zusätzlich zur vorgenannten Positionsbestimmung kann gemäß zweckmäßiger Ausgestaltung zudem auch eine Messeinrichtung vorgesehen sein, die einen Anhaltspunkt zu der auf den Servomotor wirkenden Gegenkraft zur Verfügung stellt. Die Messeinrichtung kann zweckmäßigerweise als eine Kraftmesseinrichtung und/oder als eine die Stromaufnahme des Servomotors detektierende Messeinrichtung ausgestaltet sein. Beides gewährleistet jeweils die Feststellung eines Positionspunktes, bei dem die vom Servomotor zu benötigende Kraft einen bestimmten Maximalwert überschreitet, nämlich dann, wenn der Schieber sich in der abdichtenden Endposition befindet (Schließposition). Hinzukommt, dass die Messeinrichtung es ermöglicht, Stufungen oder ein Profil der vom Servomotor benötigten Kraft über die Bewegungsstrecke der Armatur festzulegen. Beispielsweise ist zu Beginn des Öffnungsvorganges die vom Servomotor zur Verfügung zu stellende Kraft höher festzulegen und zwar aufgrund eines "Festhalteeffekts" einer beispielsweise bei einem seit langem nicht mehr betätigten, geschlossenen Armatur.

Die Messeinrichtung ermöglicht es auch, eine lastabhängige Nachregelung der Öffnungs- und/oder Schließgeschwindigkeit vorzunehmen.

Eine besonders vorteilhafte Ausgestaltung der Betätigungsvorrichtung ist dadurch gekennzeichnet, dass sie eine Selbsthemmung aufweist. Bei Energieausfall bleibt die Armatur, bei der es sich um eine Einrichtung mit hohem Gewicht handeln kann, in der momentanen Position stehen. Dies liegt an dem hohen Übersetzungsverhältnis des Drehmoments zwischen dem Servomotor und dem Getriebe. Im Übrigen hat ein Servomotor keinen Nachlauf. Der vorgenannte Vorteil stellt sich auch beim Abschalten des Servomotors an jeder beliebigen Stelle ein. Daraus wiederum erfolgt kein Nachdrücken der bewegenden Teile der Konstruktion, woraus wiederum keine zusätzlichen konstruktiven Maßnahmen notwendig sind, um ein solches Nachdrücken zu kompensieren.

Der Notlaufantrieb kann in vorteilhafter Weise beispielsweise mittels eines netzunabhängigen Akkuschraubers betrieben werden. Alternativ kann aber auch ein Notlauf per Handantrieb (z.B. Handrad, Schraubenzieher etc.) erfolgen.

Besonders platzsparend ist es, wenn der Servomotor sowie das Getriebe entlang einer gemeinsamen Achse angeordnet sind. Die Betätigung des Notlaufantriebs kann hierbei in einem Winkel, vorzugsweise rechten Winkel dazu vorgesehen sein. Idealerweise wird hierdurch auch hinsichtlich des motorischen Antriebs des Getriebes nur eine Kraftrichtung realisiert, was für eine kompakte Anordnung besonders vorteilhaft ist.

Zweckmäßigerweise handelt es sich bei dem Getriebe um ein Planetengetriebe, welches für den Einsatz eines Servomotors ganz besonders geeignet ist.

### Ausführungsbeispiel der Erfindung

Nachstehend wird anhand von Zeichnungsfiguren ein zweckmäßiges Ausführungsbeispiel der Erfindung näher erläutert.

Es zeigen:
- Fig. 1: eine Ausgestaltung der erfindungsgemäßen Betätigungsvorrichtung in stark vereinfachter schematischer Darstellungsweise im Einsatz mit einem Schieber als Armatur,
- Fig. 2: eine stark vereinfachte schematische Darstellungsweise des Servomotors einschließlich dessen Steuerungseinheit sowie
- Fig. 3: eine stark vereinfachte schematische Darstellungsweise des Verbindungsbereichs zwischen Servomotor und Getriebe, an dem der Notlaufantrieb vorgesehen ist.

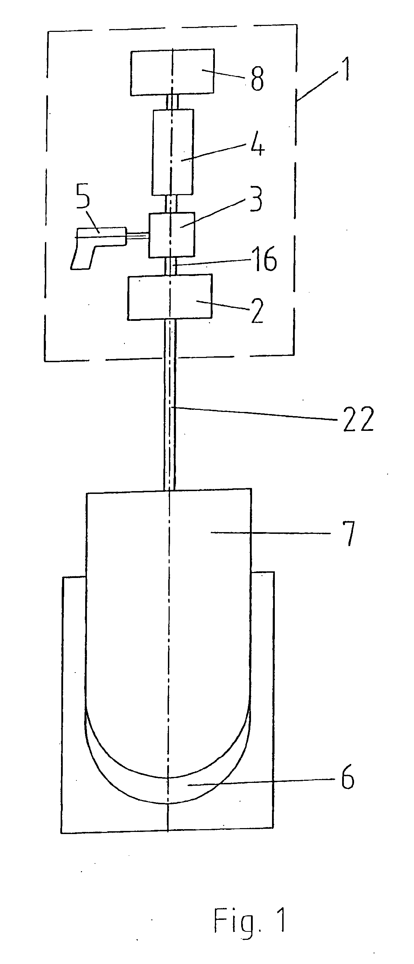

Bezugsziffer 1 in Fig. 1 bezeichnet die Betätigungsvorrichtung in ihrer Gesamtheit. Sie umfasst ein Getriebe 2, vorzugsweise ein Planetengetriebe. Die Abtriebswelle 22 des Getriebes 2 steht mit einer Armatur, vorliegend mit einem Schieber 7, in Verbindung. Der Schieber 7 ist dazu vorgesehen, eine schematisch angedeutete Rohrleitung 6 bedarfsweise zu schließen oder freizugeben.

Durch Betätigung der Abtriebswelle 22 des Getriebes 2 wird der Schieber 7 durch eine in Fig. 1 nicht dargestellte Mechanik dazu veranlasst, sich entweder nach unten oder oben zu bewegen. Es wird ausdrücklich darauf hingewiesen, dass die Betätigungsvorrichtung gemäß der vorliegenden Erfindung auch für andersartige Armaturen eingesetzt werden kann. Die Betätigungsvorrichtung ist vor allem für Armaturen im Zusammenhang mit Rohrleitungen ab einer Nennweite DN 100 vorgesehen.

An der dem Schieber 7 gegenüberliegenden Seite des Getriebes 2 steht dieses über einem Notlaufantrieb 3 mit einem Elektromotor in Verbindung, der gemäß der vorliegenden Erfindung als Servomotor 4 konzipiert ist. Hierbei handelt es sich um einen elektrischen Motor, der mit einem Servoregler einen Servoantrieb bildet und in einem geschlossenen Regelkreis betrieben wird. Zum genauen Erfassen der Rotorposition des Servomotors 4 ist dieser mit einer Messeinrichtung versehen, welche die aktuelle Position z.B. den zurückgelegten Drehwinkel bezüglich einer Anfangsposition des Rotors bestimmt. Zum Betrieb des Servomotors 4 ist eine Steuerungseinheit 8 vorgesehen.

Die Steuerungseinheit 8 kann auch gegenständlicher Bestandteil des Servomotors 4 sein. Alternativ kann die Steuerungseinheit 8 auch an einem anderen Ort als der Ort des Servomotors 4 positioniert und mit letzterem über eine Datenleitung verbunden sein.

Wie aus Fig. 1 ersichtlich ist, liegen der Servomotor 4 sowie das Getriebe 2 auf einer gemeinsamen Längsachse.

Im Bereich des Notlaufantriebs 3 befindet sich die Kopplungsstelle für das Inansatzbringen eines Hilfswerkzeugs, z.B. eines Akkuschraubers 5, für den Fall, dass z.B. bei Stromausfall eine Notbetätigung des Schiebers 7 zu erfolgen hat.

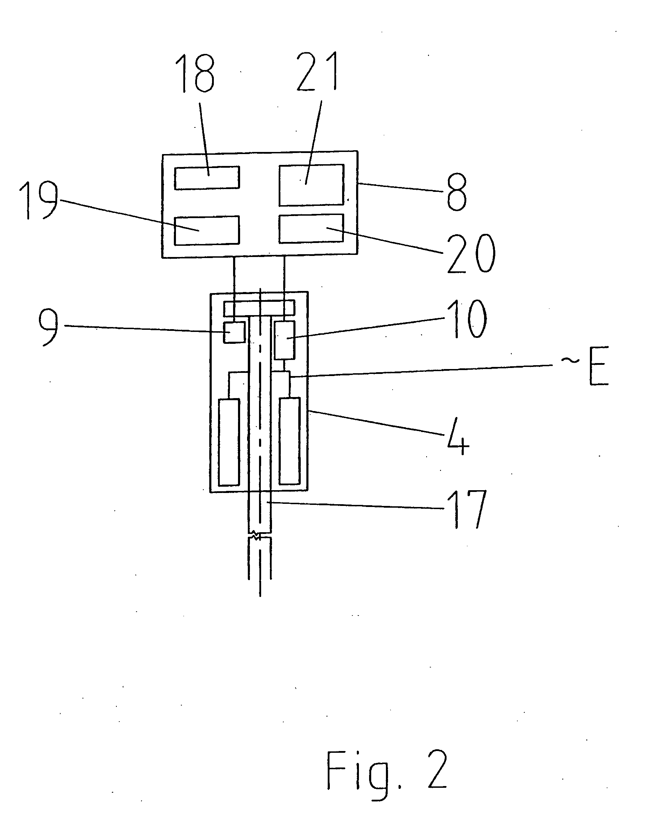

Wie aus Fig. 2 ersichtlich ist, besitzt der Servomotor 4 als Messeinrichtung eine Zähleinrichtung 9, die eine Erfassung der Drehbewegung des Rotors des Servomotors 4 bzw. dessen Welle 17 ermöglicht. Beispielsweise erzeugt die Zähleinrichtung 9 bei einer Umdrehung der Welle des Servoantriebs 32.000 Impulse. Diese Zählimpulse werden in der Steuerungseinheit 8 weiterverarbeitet und über aus der Fig. 2 nicht ersichtliche logische Funktionen zu Positionskenndaten weiterverarbeitet. Die Zählwerte bzw. Positionskenndaten werden in einem Speicher 18 abgelegt und ständig ausgelesen. Kernstück der Steuerung ist ein Prozessor 19. Ferner vorgesehen sind ein Eingabefeld 20 sowie ein Display 21.

Zusätzlich kann eine Messeinrichtung 10 vorgesehen sein, mittels der die auf den Servomotor 4 wirkende Kraft feststellbar und im Rahmen der Steuerung nutzbar ist.

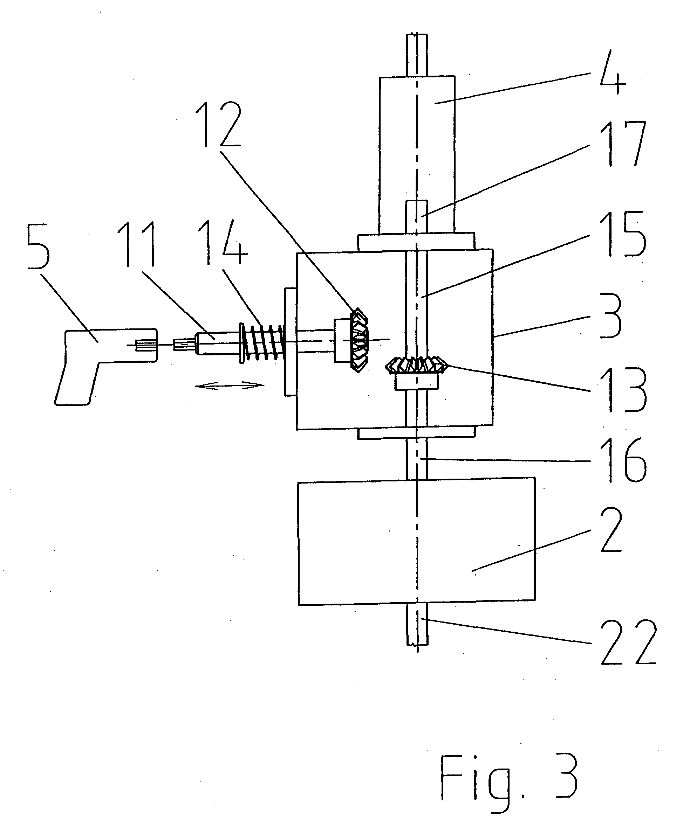

Fig. 3 zeigt in detaillierter Darstellungsform den Verbindungsbereich von Servomotor 4 und Getriebe 2. Die Welle 17 des Servomotors 4 ist mit der Antriebswelle 16 des Getriebes 2 unmittelbar verbunden, ohne dass eine Übersetzung stattfindet. Im Bereich dieser unmittelbaren Verbindung ist der Notlaufantrieb vorgesehen und zwar in Form einer im rechten Winkel positionierten Antriebswelle 11, an deren einem Ende ein Kegelrad 12 und an deren anderen Ende eine Kopplungsmöglichkeit mit einem Akkuschrauber 5 vorgesehen ist. Die Antriebswelle 11 ist mittels einer Feder 14 in einer Position nach außen hin vorgespannt.

An der Antriebswelle 16 des Getriebes 2 ist ebenfalls ein Kegelrad 13 positioniert dergestalt, dass die beiden Kegelräder 12 und 13 im rechten Winkel zueinander liegen. Durch axialen Druck auf die Antriebswelle 11 wird diese in Richtung zum Kegelrad 13 bewegt, so dass die beiden Kegelräder 12 und 13 in Angriff miteinander treten und dadurch die Antriebswelle 16 des Getriebes 2 durch Betätigung des Akkuschraubers 5 angetrieben werden kann. Bei Betätigung der Antriebswelle 16 des Getriebes 2 durch den Akkuschrauber 5 dreht sich die Welle 17 des Servomotors 4 mangels Trennung mit. Bei Demontage des Akkuschraubers 5 bewegt sich die Antriebswelle 11 aufgrund der Feder 14 wieder in die Passivlage zurück. Dadurch, dass der Servomotor 4 in Verbindung mit der Steuerungseinheit 8 die Positionsbestimmung der Armatur, d.h. in diesem Fall des Schiebers 7 unabhängig von mechanischen Endschaltern ermöglicht, wird insbesondere auch die Erstinstallation von Armaturen erheblich vereinfacht.

Beispielsweise wird der Schieberweg bzw. -hub in der Werkseinstellung auf z.B. 116 Umdrehungen festgelegt. Bei Installation des Schiebers 7 ergibt sich jedoch, beispielsweise bei örtlicher Gegebenheit, wie z.B. ungeraden Wänden oder dergleichen, dass der vorgegebene Hub mit 116 Umdrehungen nicht ausreicht. Die Steuerungseinheit 8 veranlasst daher den Servomotor 4 weiterzudrehen bis die Armatur, im vorliegenden Fall der Schieber 7, in die Endlage kommt, bei der die Steuerungseinheit 8 über die Messeinrichtung 10 die erhöhte Gegenkraft feststellt und mit der Hubposition abgleicht (beispielsweise beträgt die Hubposition in diesem Fall 116,8 Umdrehungen). Diese neue Hubposition wird in dem System, insbesondere im Arbeitsspeicher 18 gespeichert.

Im Arbeitsspeicher 18 kann insbesondere auch ein Profil der Öffnungs- oder Schließgeschwindigkeitsveränderungen in Abhängigkeit von der Position des Hubes gespeichert werden.

### BEZUGSZEICHENLISTE

- 1: Betätigungsvorrichtung
- 2: Getriebe
- 3: Notlaufantrieb
- 4: Servomotor
- 5: Akkuschrauber
- 6: Rohrleitung
- 7: Schieber
- 8: Steuerungseinheit
- 9: Zähleinrichtung
- 10: Messeinrichtung
- 11: Antriebswelle (Notlaufantrieb)
- 12: Kegelrad (Notlaufantrieb)
- 13: Kegelrad (Getriebe)
- 14: Feder
- 15: Verbindungswelle
- 16: Antriebswelle (Getriebe)
- 17: Welle (Servomotor)
- 18: Speicher
- 19: Prozessor
- 20: Eingabefeld
- 21: Display
- 22: Abtriebswelle (Getriebe)

## Patentansprüche

1. Betätigungsvorrichtung für Gehäuse- oder gehäuselose Armaturen, insbesondere für Armaturen für Rohrleitungen zum Transport von flüssigem oder gasförmigem Medium, vorzugsweise für Rohrleitungen ab einer Nennweite von DN 100 oder Gerinne, mit
einem Antriebsmotor,
einem Getriebe (2), sowie
einem Notlaufantrieb (3), mittels dem das Getriebe (2) unabhängig vom Antriebsmotor betätigbar ist,
der Antriebsmotor sowie das Getriebe (2) entlang einer gemeinsamen Achse angeordnet sind und
die Achse des Notlaufantriebs (3) in einem Winkel, vorzugsweise in rechtem Winkel, dazu positioniert ist,
**dadurch gekennzeichnet, dass**
als Antriebsmotor ein Servomotor (4) vorgesehen ist, welcher eine Messeinrichtung aufweist, die laufend die jeweils aktuelle Position des Servomotors (4) bezüglich seiner Anfangsposition bestimmt und laufend entsprechende Messwerte in Form von Positionskenndaten ausgibt,
ein Arbeitsspeicher (18) vorgesehen ist, in den die Messwerte der Messeinrichtung des Servomotors (4) eingeschrieben werden,
eine elektronische Steuerungseinheit (8) vorgesehen ist, die die Messwerte der Messeinrichtung des Servomotors (4) ausliest und eine Positionssteuerung des Servomotors (4) und damit der Betätigungsvorrichtung aufgrund der Messwerte der Messeinrichtung des Servomotors (4) vornimmt,
und das Getriebe (2) ein Übersetzungsverhältnis von mindestens 40:1 aufweist.

2. Betätigungsvorrichtung nach Anspruch 1,
**dadurch gekennzeichnet, dass**
die Abtriebsseite des Servomotors (4) mit der Antriebsseite des Getriebes (2) ohne Übersetzung in Verbindung steht.

3. Betätigungsvorrichtung nach Anspruch 1 oder 2,
**dadurch gekennzeichnet, dass**
bei Betrieb des Notlaufantriebs (3) der Servomotor (4) mitgedreht wird.

4. Betätigungsvorrichtung nach mindestens einem der vorhergehenden Ansprüche,
**dadurch gekennzeichnet, dass**
bei Betätigung des Getriebes (2) mittels des Notlaufantriebs (3) zwischen Notlaufantrieb (3) und dem Getriebe (2) ein direkter Kraftschluss herstellbar ist.

5. Betätigungsvorrichtung nach Anspruch 4,
**dadurch gekennzeichnet, dass**
der direkte Kraftschluss mittels eines in seiner Position veränderbaren Kupplungsteils, welches mit einem, mit dem Getriebe (2) zusammenwirkenden weiteren Kupplungsteil in Eingriff bringbar ist, hergestellt wird.

6. Betätigungsvorrichtung nach mindestens einem der vorhergehenden Ansprüche,
**dadurch gekennzeichnet, dass**
das Getriebe (2) mindestens ein Übersetzungsverhältnis von 70:1, vorzugsweise 90: 1, aufweist.

7. Betätigungsvorrichtung nach mindestens einem der vorhergehenden Ansprüche,
**dadurch gekennzeichnet, dass**
das Drehmoment des Servomotors (4) maximal 30 Nm, vorzugsweise maximal 20 Nm, besonders vorzugsweise maximal 10 Nm, beträgt.

8. Betätigungsvorrichtung nach mindestens einem der vorhergehenden Ansprüche,
**dadurch gekennzeichnet, dass**
als Messeinrichtung des Servomotors (4) eine Zähleinrichtung (9) vorgesehen ist, mittels der aus der Anzahl der Umdrehungen des Servomotors (4) resultierende Zählimpulse erzeugbar sind und die Zählimpulse für die Steuerung der Betätigungsvorrichtung, insbesondere für die Positionsbestimmung und/oder Geschwindigkeitsbestimmung der Öffnungs- oder Schließbewegung der Armatur auswertbar sind.

9. Betätigungsvorrichtung nach mindestens einem der vorhergehenden Ansprüche,
**dadurch gekennzeichnet, dass**
eine Messeinrichtung (10) vorgesehen ist, mittels der die auf den Servomotor (4) wirkende Gegenkraft, insbesondere die beim Schließvorgang der Armatur auf den Servomotor (4) wirkende Gegenkraft, feststellbar ist.

10. Betätigungsvorrichtung nach mindestens einem der vorhergehenden Ansprüche,
**dadurch gekennzeichnet, dass**
die Betätigungsvorrichtung eine Selbsthemmung aufweist, die gewährleistet, dass bei Energieausfall die Armatur in der momentanen Position verbleibt.

11. Betätigungsvorrichtung nach mindestens einem der vorhergehenden Ansprüche,
**dadurch gekennzeichnet, dass**
der Notlaufantrieb (3) mittels einer herkömmlichen Handbohrmaschine, insbesondere einem Akkuschrauber (5), betätigbar ist.

12. Betätigungsvorrichtung nach mindestens einem der vorhergehenden Ansprüche,
**dadurch gekennzeichnet, dass**
es sich bei dem Getriebe (2) um ein Planetengetriebe handelt.

## Claims

1. Actuating device for housed or housingless valves, in particular for valves for pipelines for transporting liquid or gaseous medium, preferably for pipelines from a nominal diameter of DN 100 or channels, having
a drive motor,
a gear mechanism (2), and
an emergency running drive (3), by means of which the gear mechanism (2) can be actuated independently of the drive motor,
the drive motor and the gear mechanism (2) are arranged along a common axis and
the axis of the emergency running drive (3) is positioned at an angle, preferably a right angle, thereto,
**characterized in that**
a servo motor (4), which has a measuring device which continuously determines the respectively present position of the servo motor (4) in relation to its initial position and continuously outputs corresponding measured values in the form of characteristic positional data, is provided as the drive motor,
a working memory (18), into which the measured values of the measuring device of the servo motor (4) are written, is provided,
an electronic control unit (8), which reads out the measured values of the measuring device of the servo motor (4) and performs positional control of the servo motor (4), and therefore of the actuating device, on the basis of the measured values of the measuring device of the servo motor (4), is provided,
and the gear mechanism (2) has a speed-transforming transmission ratio of at least 40:1.

2. Actuating device according to Claim 1,
**characterized in that**
the output side of the servo motor (4) is in connection with the input side of the gear mechanism (2) without a speed-transforming transmission.

3. Actuating device according to Claim 1 or 2, **characterized in that**,
when the emergency running drive (3) is operated, the servo motor (4) is co-rotated.

4. Actuating device according to at least one of the preceding claims,
**characterized in that**,
when the gear mechanism (2) is actuated by means of the emergency running drive (3), a direct positive connection can be established between the emergency running drive (3) and the gear mechanism (2).

5. Actuating device according to Claim 4,
**characterized in that**
the direct positive connection is established by means of a coupling part which can be changed in its position and can be brought into engagement with a further coupling part interacting with the gear mechanism (2).

6. Actuating device according to at least one of the preceding claims,
**characterized in that**
the gear mechanism (2) has a speed-transforming transmission ratio of at least 70:1, preferably 90:1.

7. Actuating device according to at least one of the preceding claims,
**characterized in that** the torque of the servo motor (4) is at most 30 Nm, preferably at most 20 Nm, particularly preferably at most 10 Nm.

8. Actuating device according to at least one of the preceding claims,
**characterized in that**
a counting device (9) is provided as the measuring device of the servo motor (4), by means of which device counting pulses resulting from the number of revolutions of the servo motor (4) can be generated and the counting pulses can be evaluated for the control of the actuating device, in particular for determining the position and/or determining the speed of the opening or closing movement of the valve.

9. Actuating device according to at least one of the preceding claims,
**characterized in that**
a measuring device (10) is provided, by means of which device the counter force acting on the servo motor (4), in particular the counter force acting on the servo motor (4) during the closing operation of the valve, can be established.

10. Actuating device according to at least one of the preceding claims,
**characterized in that**
the actuating device has a self-locking means, which ensures that, if there is a power failure, the valve remains in the momentary position.

11. Actuating device according to at least one of the preceding claims,
**characterized in that**
the emergency running drive (3) can be actuated by means of a conventional hand drill, in particular a cordless screwdriver (5).

12. Actuating device according to at least one of the preceding claims,
**characterized in that**
the gear mechanism (2) is a planetary gear mechanism.

## Revendications

1. Dispositif d'actionnement pour des robinetteries avec ou sans corps, en particulier pour des robinetteries de conduites tubulaires pour le transport de milieu liquide ou gazeux, de préférence pour des conduites tubulaires à partir d'une largeur nominale de DN 100 ou des conduits, comprenant
un moteur d'entraînement,
une transmission (2), et
un entraînement de secours (3), au moyen duquel la transmission (2) peut être actionnée indépendamment du moteur d'entraînement,
le moteur d'entraînement ainsi que la transmission (2) étant disposés le long d'un axe commun et l'axe de l'entraînement de secours (3) étant positionné par rapport à ceux-ci suivant un certain angle, de préférence un angle droit, **caractérisé en ce que**
l'on prévoit en tant que moteur d'entraînement un servomoteur (4) qui présente un dispositif de mesure qui détermine en continu la position respective actuelle du servomoteur (4) par rapport à sa position de départ et qui émet en continu des valeurs de mesure correspondantes sous la forme de données caractéristiques de position,
l'on prévoit un accumulateur de travail (18) dans lequel sont écrites les valeurs de mesure du dispositif de mesure du servomoteur (4),
l'on prévoit une unité de commande électronique (8) qui lit les valeurs de mesure du dispositif de mesure du servomoteur (4) et effectue une commande position du servomoteur (4) et par conséquent du dispositif d'actionnement sur la base des valeurs de mesure du dispositif de mesure du servomoteur (4),
et la transmission (2) présente un rapport de multiplication d'au moins 40:1.

2. Dispositif d'actionnement selon la revendication 1,
**caractérisé en ce que**
le côté de sortie du servomoteur (4) est en liaison sans rapport de multiplication avec le côté d'entraînement de la transmission (2).

3. Dispositif d'actionnement selon la revendication 1 ou 2,
**caractérisé en ce que**
lors du fonctionnement de l'entraînement de secours (3), le servomoteur (4) est entraîné en rotation conjointement.

4. Dispositif d'actionnement selon au moins l'une quelconque des revendications précédentes,
**caractérisé en ce que**
lors de l'actionnement de la transmission (2) au moyen de l'entraînement de secours (3), un engagement de liaison par force direct peut être établi entre l'entraînement de secours (3) et la transmission (2).

5. Dispositif d'actionnement selon la revendication 4,
**caractérisé en ce que**
l'engagement de liaison par force direct est établi au moyen d'une partie d'embrayage de position variable, qui peut être amenée en prise avec une partie d'embrayage supplémentaire coopérant avec la transmission (2).

6. Dispositif d'actionnement selon au moins l'une quelconque des revendications précédentes,
**caractérisé en ce que**
la transmission (2) présente au moins un rapport de multiplication de 70:1, de préférence de 90:1.

7. Dispositif d'actionnement selon au moins l'une quelconque des revendications précédentes,
**caractérisé en ce que**
le couple du servomoteur (4) vaut au maximum 30 Nm, de préférence au maximum 20 Nm.

8. Dispositif d'actionnement selon au moins l'une quelconque des revendications précédentes,
**caractérisé en ce que**
l'on prévoit en tant que dispositif de mesure du servomoteur (4) un dispositif compteur (9), au moyen duquel des impulsions de comptage résultant du nombre de rotations du servomoteur (4) peuvent être générées, et les impulsions de comptage pour la commande du dispositif d'actionnement, en particulier pour la détermination de position et/ou la détermination de la vitesse du mouvement d'ouverture ou de fermeture de la robinetterie, peuvent être évaluées.

9. Dispositif d'actionnement selon au moins l'une quelconque des revendications précédentes,
**caractérisé en ce que**
l'on prévoit un dispositif de mesure (10) au moyen duquel la force antagoniste agissant sur le servomoteur (4), en particulier la force antagoniste agissant sur le servomoteur (4) lors de l'opération de fermeture de la robinetterie, peut être déterminée.

10. Dispositif d'actionnement selon au moins l'une quelconque des revendications précédentes,
**caractérisé en ce que**
le dispositif d'actionnement présente un autoblocage qui garantit que la robinetterie reste dans la position actuelle en cas de panne de puissance.

11. Dispositif d'actionnement selon au moins l'une quelconque des revendications précédentes,
**caractérisé en ce que**
l'entraînement de secours (3) peut être actionné au moyen d'une perceuse à main usuelle, en particulier d'un tournevis électrique (5).

12. Dispositif d'actionnement selon au moins l'une quelconque des revendications précédentes,
**caractérisé en ce que**
la transmission (2) est une transmission planétaire.
